(19) **Europäisches Patentamt**

**European Patent Office**

**Office européen des brevets**

(11) **EP 1 394 987 A1**

(12) **EUROPÄISCHE PATENTANMELDUNG**

(43) Veröffentlichungstag:
**03.03.2004 Patentblatt 2004/10**

(51) Int Cl.[7]: **H04L 12/28**, H04L 29/14

(21) Anmeldenummer: **02019298.5**

(22) Anmeldetag: **28.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(71) Anmelder: **SIEMENS AKTIENGESELLSCHAFT**
**80333 München (DE)**

(72) Erfinder:
• **Arnold, Robert, Dr.**
  **09423 Gelenau (DE)**

• **Hertlein, Thomas, Dr.**
  **81477 München (DE)**
• **Koepp, Joerg**
  **81476 München (DE)**
• **Leitol, Stefan**
  **81475 München (DE)**
• **Schumacher, Rainer**
  **81477 München (DE)**
• **Stemplinger, Robert**
  **81377 München (DE)**

(54) **Redundante Netzwerkanordnung**

(57)     Hoch zuverlässige Kommunikationssysteme erfordern den Einsatz redundanter Nachrichtenpfade, so daß eine Störung eines einzelnen Nachrichtenpfades nicht zu Einschränkungen in der Kommunikation führt. Für Kommunikationssysteme mit Echtzeit-Anforderungen sind sehr schnelle Umschaltzeiten von einem gestörten Nachrichtenpfad auf einen Ersatz-Nachrichtenpfad von großer Bedeutung. Ein in der Praxis sehr häufig anzutreffendes Kommunikationssystem besteht aus einem oder mehreren Hosts bzw. Service-Plattformen, die über ein redundantes lokales Netz (LAN) und zwei Gateways (G0, G1) an ein IP-Netzwerk (IP) angeschlossen sind. Erfindungsgemäß wird eine Netzwerkanordnung für ein Kommunikationsnetz (LAN), welches eine erste Einrichtung (Host) und eine zweite Einrichtung (G0) verbindet, vorgesehen, bestehend aus einem ersten Teilnetz ($LAN_0$) und zumindest einem zweiten Teilnetz ($LAN_1$), wobei das erste Teilnetz ($LAN_0$) aus ersten vermittelnden Elementen ($S_{00}$, $S_{01}$, $S_{02}$) besteht und wobei das zweite Teilnetz ($LAN_1$) aus zweiten vermittelnden Elementen ($S_{10}$, $S_{11}$, $S_{12}$) besteht und wobei das erste und das zweite Teilnetz unabhängig voneinander aufgebaut sind, mit zumindest einer Querverbindung ($Q_1$) zwischen den Teilnetzen ($LAN_0$, $LAN_1$) und mit zumindest einer ersten Verbindung ($L_{00}$) zwischen dem ersten Teilnetz und einer ersten Schnittstelle (IF0) der ersten Einrichtung (Host) und zumindest einer zweiten Verbindung ($L_{10}$) zwischen dem zweiten Teilnetz und einer zweiten Schnittstelle (IF1) der ersten Einrichtung (Host) und mit zumindest einer dritten Verbindung ($L_{03}$) zwischen dem ersten Teilnetz und der zweiten Einrichtung (G0).

FIG 7

EP 1 394 987 A1

**Beschreibung**

Hoch zuverlässige Kommunikationssysteme erfordern den Einsatz redundanter Nachrichtenpfade, so daß eine Störung eines einzelnen Nachrichtenpfades nicht zu Einschränkungen in der Kommunikation führt. Die Redundanz der Nachrichtenpfade, d.h. für jeden Nachrichtenpfad existiert zumindest ein Ersatz-Nachrichtenpfad, auf den im Störungsfall umgeschaltet werden kann, muß dabei von den Service-Plattformen bzw. Hosts wie auch von dem Kommunikationssystem selbst, d.h. durch dessen Elemente, z.B. Switches und Router, und dessen Struktur unterstützt werden.

Für Kommunikationssysteme mit Echtzeit-Anforderungen, beispielsweise im Fall von Übertragung von Sprache, sind außerdem auch sehr schnelle Umschaltzeiten von einem gestörten Nachrichtenpfad auf einen Ersatz-Nachrichtenpfad von großer Bedeutung, um die negativen Auswirkungen auf den Betrieb bei Ausfall eines Nachrichtenpfades auf ein Minimum zu begrenzen.

Zu berücksichtigende Störungen umfassen Totalausfälle und/oder Teilausfälle in einzelnen Elementen des Kommunikationssystems, z.B. Service-Plattform, Switches, Router, und Ausfälle der Verbindungen zwischen den einzelnen Elementen.

Ein in der Praxis sehr häufig anzutreffendes Kommunikationssystem besteht aus einem oder mehreren Hosts bzw. Service-Plattformen, die über LAN (LAN = Local Area Network) und zwei Gateways an ein IP-Netzwerk (IP = Internet Protocol) angeschlossen sind.

Es ist eine Aufgabe der vorliegenden Erfindung, eine effiziente Netzwerkanordnung anzugeben, die mehrere Nachrichtenpfade vorsieht. Dabei soll die Netzwerkanordnung eine schnelle Erkennung gestörter Nachrichtenpfade und ein schnelles Umschalten auf ungestörte Nachrichtenpfade ermöglichen.

Diese Aufgabe wird durch eine Netzwerkanordnung gemäß der Merkmale des Patentanspruchs 1 gelöst.

Bevorzugte Ausführungsformen sind Gegenstand der abhängigen Ansprüche.

Gemäß der vorliegenden Erfindung wird eine Netzwerkanordnung für ein Kommunikationsnetz LAN, welches eine erste Einrichtung Host und eine zweite Einrichtung G0 verbindet, vorgesehen,

- bestehend aus einem ersten Teilnetz $LAN_0$ und zumindest einem zweiten Teilnetz $LAN_1$,
- wobei das erste Teilnetz $LAN_0$ aus ersten vermittelnden Elementen $S_{00}$, $S_{01}$, $S_{02}$ besteht und wobei das zweite Teilnetz $LAN_1$ aus zweiten vermittelnden Elementen $S_{10}$, $S_{11}$, $S_{12}$ besteht und
- wobei das erste und das zweite Teilnetz unabhängig voneinander aufgebaut sind,
- mit zumindest einer Querverbindung $Q_1$ zwischen den Teilnetzen $LAN_0$, $LAN_1$ und
- mit zumindest einer ersten Verbindung $L_{00}$ zwischen dem ersten Teilnetz und einer ersten Schnittstelle IF0 der ersten Einrichtung Host und zumindest einer zweiten Verbindung $L_{10}$ zwischen dem zweiten Teilnetz und einer zweiten Schnittstelle IF1 der ersten Einrichtung Host und
- mit zumindest einer dritten Verbindung $L_{03}$ zwischen dem ersten Teilnetz und der zweiten Einrichtung G0.

Ein wesentlichen Vorteil der Erfindung ist darin zu sehen, daß bei Verbindung mehrerer Einrichtungen Host mit der zweiten Einrichtung G0 durch die erfindungsgemäße Netzwerkanordnung jede Einrichtung Host über die jeweils zwei Schnittstellen IFO, IF1 zwei redundante Nachrichtenpfade zu der zweiten Einrichtung G0 aufweist. Einer der Nachrichtenpfade verläuft dabei über die Querverbindung $Q_1$ zwischen den zwei redundanten Teilnetzen, der andere verläuft innerhalb eines Teilnetzes.

Für das bevorzugte Ausführungsbeispiel, bei dem die Nachrichtenpfade durch ein lokales Netz LAN zwischen einem Host und einem Gateway gebildet werden, kann aus Gründen der Zuverlässigkeit vorteilhaft ein zweiter Gateway G1 eingesetzt werden. So wird vermieden, daß der Ausfall des Default Gateway G0 zu einer Isolation des gesamten LAN führt.

In Kombination mit dem zweiten Gateway G1 ergeben sich vorteilhaft mehrere Nachrichtenpfade, welche die Kommunikation zwischen Hosts und zumindest einem der Gateways G0, G1 auch bei Störungen einzelner Nachrichtenpfade aufgrund gestörter Verbindungen oder gestörter vermittelnder Elemente ermöglichen.

Ein weiterer Vorteil besteht darin, daß mittels der Querverbindung(en) $Q_1$ zwischen den Teilnetzen $LAN_0$ und $LAN_1$ mehrere Hosts unabhängig von den Gateways miteinander kommunizieren können, und zwar auch dann, wenn verschiedene Schnittstellen der Hosts aktiv sind. Beispielsweise kann ein erster Host mit erster aktiver Schnittstelle mit einem zweiten Host mit zweiter aktiver Schnittstelle über die Querverbindung(en) Nachrichten austauschen. Dies wäre ohne die erfindungsgemäße Querverbindung nicht möglich.

Im folgenden wird die Erfindung im Zusammenhang mit sechs Figuren als Ausführungsbeispiel näher erläutert.

Figur 1     stellt die Anbindung einer Host-Einrichtung an ein Gateway über ein redundantes LAN schematisch dar.

Figur 2     stellt die Nachrichtenpfade zwischen einer Host-Einrichtung und dem Gateway im störungsfreien Fall schematisch dar.

Figuren 3-6    zeigen schematisch die Nachrichtenpfade in verschiedenen Störungsfällen.

Figur 7    zeigt schematisch die Anbindung mehrerer Host-Einrichtungen an ein Gateway über ein redundantes LAN.

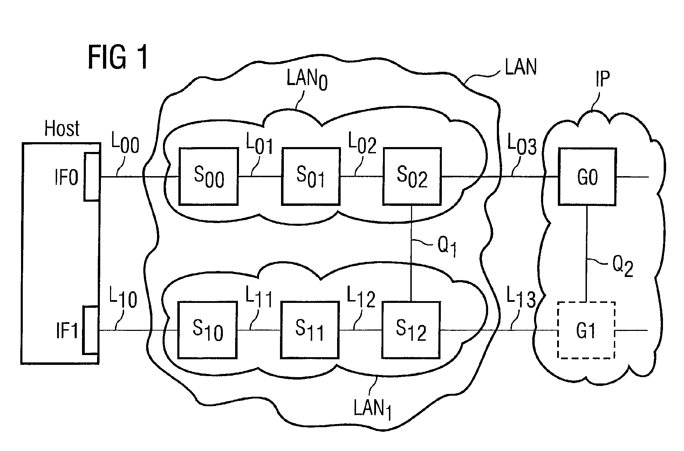

In Figur 1 ist eine erste Einrichtung Host dargestellt. Bei dieser ersten Einrichtung kann es sich beispielsweise um eine der eingangs genannten Hosts-Einrichtungen oder Service-Plattformen handeln. Die erste Einrichtung kann jedoch eine beliebige Kommunikationseinrichtung mit L3 Kommunikationsfähigkeiten sein. Im folgenden wird zur Vereinfachung die Bezeichnung Host für die erste Einrichtung verwendet.

Der Host wird über ein Kommunikationsnetz LAN mit einer zweiten Einrichtung G0 verbunden. Bei dieser zweiten Einrichtung kann es sich beispielsweise um einen der eingangs genannten Gateways handeln. Die zweite Einrichtung kann jedoch ebenfalls eine beliebige Kommunikationseinrichtung mit L3 Kommunikationsfähigkeiten sein. Im folgenden wird zur Vereinfachung die Bezeichnung Gateway für die zweite Einrichtung verwendet.

Bei dem Kommunikationsnetz LAN handelt es sich im bevorzugten Ausführungsbeispiel um ein lokales Netzwerk bzw. Local Area Network LAN, welches z.B. nach dem Ethernet-Standard arbeitet. Andere Netzwerke und/oder Protokolle sind für den transparenten Nachrichtentransport zwischen Host und Gateway einsetzbar. Im folgenden wird zur Vereinfachung die Bezeichnung LAN für das Kommunikationsnetz verwendet.

Das LAN ist in zwei unabhängige Teilnetze $LAN_0$, $LAN_1$ gegliedert. Diese Gliederung wird im einfachsten Fall auf logischer Ebene realisiert, wird jedoch, um eine möglichst große Ausfalsicherheit vorzusehen, vorteilhaft auch räumlich vorgenommen. Dabei besteht $LAN_0$ aus einer Anzahl von Vermittlungskomponenten oder Switches $S_{00}$, $S_{01}$, $S_{02}$. Dargestellt sind drei Vermittlungskomponenten, allerdings ist diese Anzahl lediglich beispielhaft und aus Sicht dieser Erfindung beliebig, ebenso wie die Struktur des $LAN_0$ beliebig ist, die nur beispielhaft als linear dargestellt ist.

Die Switches $S_{00}$, $S_{01}$ sind mit einer Verbindung $L_{01}$ verbunden, wobei diese Verbindung repräsentativ für eine logische, bidirektionale Verbindung zwischen den Switches dargestellt ist und beispielsweise physikalisch durch mehrere Verbindungen gebildet sein kann. In gleicher Weise sind die Switches $S_{01}$, $S_{02}$ mit einer Verbindung $L_{02}$ verbunden.

$LAN_1$ besteht aus einer Anzahl von Vermittlungskomponenten oder Switches $S_{10}$, $S_{11}$, $S_{12}$. Dargestellt sind drei Vermittlungskomponenten, allerdings ist diese Anzahl lediglich beispielhaft und aus Sicht dieser Erfindung beliebig, ebenso wie die Struktur des $LAN_0$ beliebig ist, die nur beispielhaft als linear dargestellt ist. Die Switches $S_{10}$, $S_{11}$ sind mit einer Verbindung $L_{11}$ verbunden, wobei diese Verbindung repräsentativ für eine logische, bidirektionale Verbindung zwischen den Switches dargestellt ist und beispielsweise physikalisch durch mehrere Verbindungen gebildet sein kann. In gleicher Weise sind die Switches $S_{11}$, $S_{12}$ mit einer Verbindung $L_{12}$ verbunden.

$LAN_0$ ist mit dem Host über eine Verbindung $L_{00}$ verbunden. $LAN_1$ ist mit dem Host über eine Verbindung $L_{10}$ verbunden. Dabei weist der Host zwei gesonderte Schnittstellen IF0, IF1 auf, wobei eine erste Schnittstelle IF0 der Verbindung mit $LAN_0$ dient und eine zweite Schnittstelle IF1 der Verbindung mit $LAN_1$.

Der Verbindung von $LAN_0$ mit dem Gateway G0 dient eine Verbindung $L_{03}$. Je nach Ausprägung der Redundanztopologie verfügt $LAN_1$ ebenfalls über eine Anbindung an Gateway G0 - nicht dargestellt - und/oder über zumindest eine Querverbindung $Q_1$ zu $LAN_0$. Vorteilhaft erfolgt diese Querverbindung möglichst nah am Übergang von $LAN_0$ zum Gateway G0, d.h. wie in Figur 1 dargestellt beispielsweise zwischen $S_{02}$ und $S_{12}$. Ist die Querverbindung $Q_1$ nicht unmittelbar am Übergang von $LAN_0$ zum Gateway G0 angeordnet, können geeignete Protokollen zur Vermeidung von L2 Loops im Zusammenhang mit der vorliegenden Erfindung eingesetzt werden. Es versteht sich, daß die Querverbindung $Q_1$ physikalisch aus mehreren Verbindungen bestehen kann.

In einer vorteilhaften Ausgestaltung ist zusätzlich zum Gateway G0 ein Ersatz-Gateway G1 vorgesehen, beispielsweise für den Fall des Ausfalls des Gateway G0 - gestrichelt dargestellt. Dabei können die Gateways G0, G1 ebenfalls mittels einer Querverbindung $Q_2$ verbunden sein. Eine Verbindung $L_{13}$ verbindet $LAN_1$ und Gateway G1. Je nach Ausprägung der Redundanztopologie verfügt $LAN_0$ ebenfalls über eine Anbindung an Gateway G1 - nicht dargestellt.

Eine Priorisierung der Gateways G0, G1 kann vorgenommen werden, indem die Routing-Tabellen entsprechend administriert werden. Beispielsweise kann die Verbindung von Gateway G0 ins weitere IP Netz IP als eine lowercost Route und die Verbindung von Gateway G1 ins weitere IP Netz IP als eine highercost Route eingerichtet werden. Die Priorisierung ist eine Möglichkeit, im Fall einer Störung der Querverbindung $Q_1$ sicherzustellen, daß der Host stets das an den Default Gateway G0 angeschlossene Netzwerk (hier: $LAN_0$) zur Kommunikation verwendet.

Eine solche Priorisierung ist jedoch nicht in allen Fällen erforderlich, beispielsweise falls die Querverbindung $Q_1$ physikalisch aus mehreren Verbindungen besteht - nicht dargestellt. In diesem Fall ist die Priorisierung nicht erforderlich, da beim Ausfall einer dieser Verbindungen zumindest eine weitere Verbindung zur Verfügung steht.

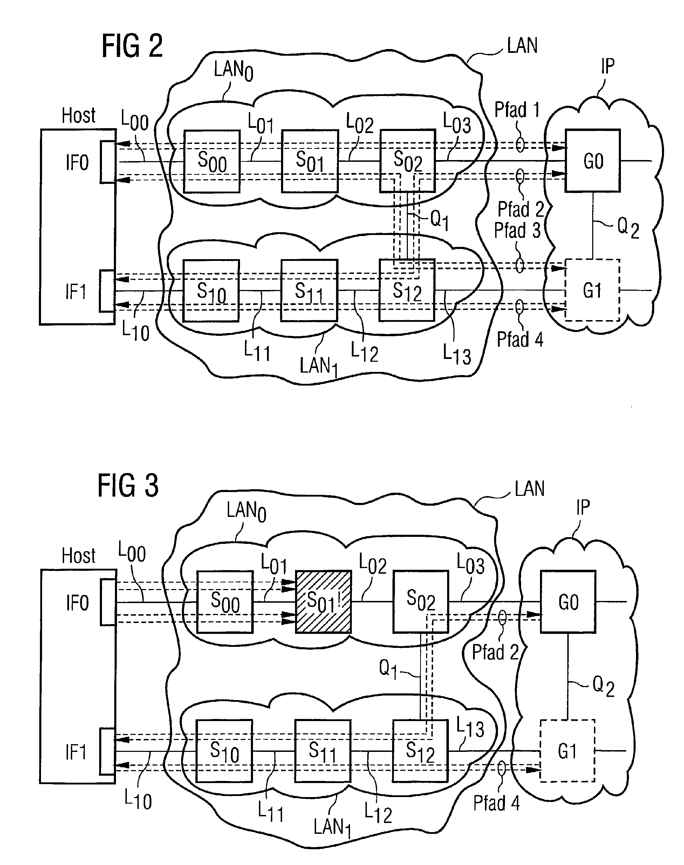

Mit der vorgestellten Netztopologie ergeben sich beispielhaft die folgenden, in Figur 2 dargestellten Nachrichtenpfade. Dabei werden nur LAN-interne Pfade betrachtet:

Pfad1: Host <-> IF0 <-> $LAN_0$ <-> G0 <-> IP
Pfad2: Host <-> IF1 <-> $LAN_1$ <-> $Q_1$ <-> $S_{02}$ <-> G0 <-> IP
Pfad3: Host <-> IF0 <-> $LAN_0$ <-> $Q_1$ <-> $S_{12}$ <-> G1 <-> IP
Pfad4: Host <-> IF1 <-> $LAN_1$ <-> G1 <-> IP

Ist für die Gateways G0, G1 die genannte Priorisierung vorgesehen und wird zudem noch eine Priorisierung der Schnittstellen IF0, IF1 vorgenommen, wobei beispielsweise IF0 die höhere Priorität hat, ergibt sich folgende Priorisierung der genannten Pfade, falls die Gateway-Priorisierung stärker wirken soll als die Schnittstellen-Priorisierung:

Pfad1 > Pfad2 > Pfad3 > Pfad4

Weitere Nachrichtenpfade ergeben sich in analoger Weise, wenn die genannten Über-Kreuz-Verbindungen von $LAN_0$ zu G1 und $LAN_1$ zu G0 vorhanden sind und/oder wenn weitere Querverbindungen oder auch Kreuzverbindungen innerhalb des LAN zwischen $LAN_0$ und $LAN_1$ existieren.

In vorteilhafter Weise ergibt sich durch die mit Bezug auf Figur 1 dargestellte Netzwerkanordnung, daß jeder Host den (Default) Gateway G0 über mindestens zwei Wege erreichen kann und daß ein erster Host mit aktiver Schnittstelle IF0 und Standby-Schnittstelle IF1 mit einem weiteren Host mit Standby-Schnittstelle IF0 und aktiver Schnittstelle IF1 - nicht dargestellt- über LAN Nachrichtenpfade kommunizieren kann. Selbst bei Störung beider Gateways G0 und G1 können die Hosts miteinander über die Querverbindung Nachrichten austauschen.

Obwohl mehrere Querverbindungen zwischen den Teilnetzen $LAN_0$, $LAN_1$ vorgesehen werden können, ist es vorteilhaft, lediglich eine Querverbindung $Q_1$ an den Switches vorzusehen, die am nächsten zu den Gateways G0, G1 liegen. So können Layer 2 Loops und damit der Einsatz eines Spanning Tree Protokolls SPT vermieden werden.

Figur 3 zeigt den Ausfall eines Switches in $LAN_0$, der nicht an die Querverbindung $Q_1$ angeschlossen ist, hier beispielhaft Switch $S_{01}$. Dadurch werden die Pfade 1 und 3 gestört. Pfade 2 und 4 sind ungestört. Schnittstelle IF0 sei die bis dahin aktive (ACT) Schnittstelle. Entsprechend der Priorisierung der Nachrichtenpfade wird Pfad2 als Ersatzweg aktiviert, indem die Schnittstelle IF1 von STB nach ACT wechselt. Für Schnittstelle IF0 wird beispielsweise der Zustand "gestört" vermerkt, und, falls erforderlich, ein Alarm für Bedienpersonal ausgelöst.

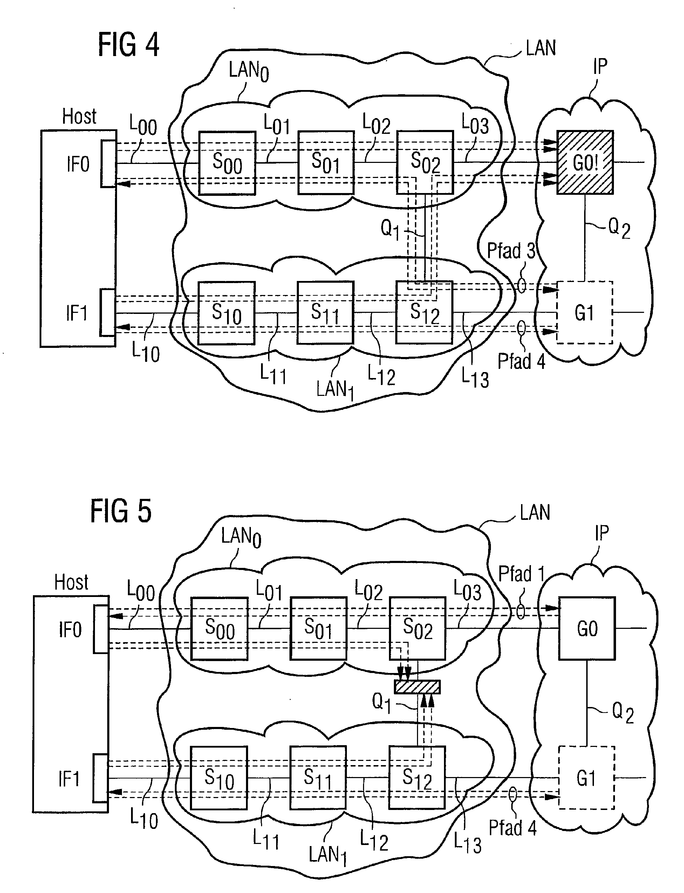

Figur 4 zeigt den Ausfall des Gateway G0. Dadurch werden die Pfade 1 und 2 gestört. Pfade 3 und 4 sind ungestört. Entsprechend der Priorisierung der Nachrichtenpfade wird Pfad3 als Ersatzweg aktiviert, indem ein sogenannter Gateway Failover (Umschalten zum Ersatz-Gateway) ausgeführt wird. Für Gateway G0 wird beispielsweise der Zustand "gestört" vermerkt, und, falls erforderlich, ein Alarm für Bedienpersonal ausgelöst.

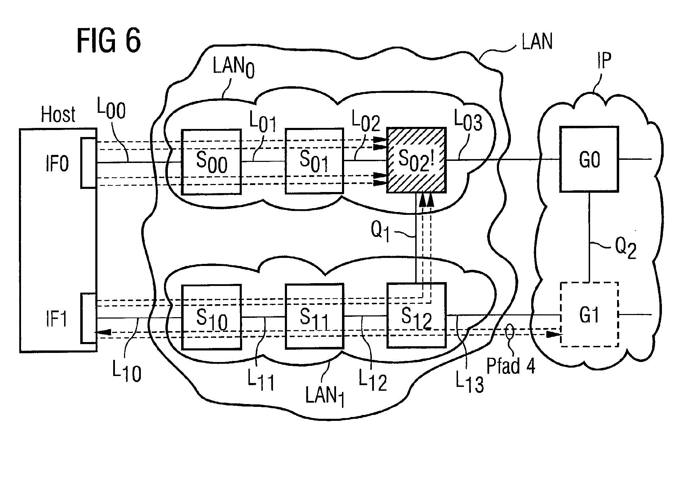

Figur 5 zeigt den Ausfall der Querverbindung $Q_1$ zwischen $LAN_0$ und $LAN_1$. Dadurch werden die Pfade 2 und 3 gestört. Pfade 1 und 4 sind ungestört. Schnittstelle IF0 sei die bis dahin aktive (ACT) Schnittstelle. Entsprechend der Priorisierung der Nachrichtenpfade bleibt Pfad1 aktiv, es kann jedoch eine Benachrichtigung für Bedienpersonal erfolgen, daß eine Störung vorliegt.

Wird durch einen weiteren Ausfall auch Pfad1 gestört, ohne daß die Störung der Pfade 2 und 3 entfällt, wird dann direkt auf den niedrigst priorisierten Pfad 4 umgeschaltet.

Figur 6 zeigt den Ausfall eines Switches in $LAN_0$, der an die Querverbindung $Q_1$ angeschlossen ist, hier beispielhaft Switch $S_{02}$. Dadurch werden die Pfade 1, 2 und 3 gestört. Pfad 4 ist ungestört. Schnittstelle IF0 sei die bis dahin aktive (ACT) Schnittstelle. Da Pfad4 der einzige verbleibende Pfad ist, wird dieser als Ersatzweg aktiviert, indem die Schnittstelle IF1 von STB nach ACT wechselt. Für Schnittstelle IF0 wird beispielsweise der Zustand "gestört" vermerkt, und gegebenenfalls ein Alarm für Bedienpersonal ausgelöst. Ein gesonderter Alarm, der anzeigt, daß kein weiterer Ersatz-Nachrichtenpfad vorhanden ist und somit jeder weitere Ausfall zum Totalausfall führt, kann ebenfalls ausgelöst werden.

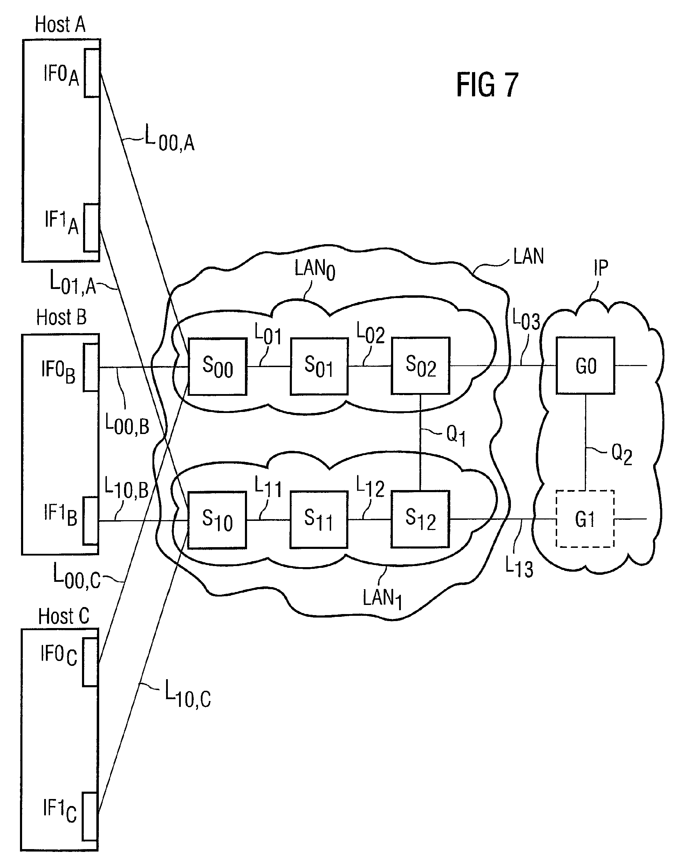

Figur 7 zeigt schließlich die Anbindung mehrerer Host-Komponenten Host A, Host B, Host C an den Gateway G0 mittels der erfindungsgemäßen Netzanordnung. Durch die beschriebene Priorisierung der Schnittstellen IF0, IF1 für jede der Host-Komponenten wird erreicht, daß alle Host-Komponenten stets über die gleiche Schnittstelle, beispielsweise IF0, kommunizieren und somit eine (lokale) Host-zu-Host-Kommunikation auch bei Störung der Kommunikation mit G0 und G1 problemlos möglich ist.

Die mit Bezug auf Figuren 3 bis 6 beschriebene Umschaltstrategie wird in folgender Tabelle veranschaulicht. Darin bedeuten:

"x"        Pfad ungestört
"o"        Zustand des Pfades ist egal
"-"        Pfad gestört
"P1..P4"   Pfad1..Pfad4
IF-FO      Schnittstellen-Failover

G-FO        Gateway-Failover

| P1 | P2 | P3 | P4 | Reaktion | Mögliche Ursache |
|---|---|---|---|---|---|
| x | o | o | o | Kein FO (IF0/G0 aktiv) | $LAN_0$ und G0 ungestört ($LAN_1$, $Q_i$, G1 können gestört sein) |
| - | x | o | o | IF-FO zu IF1 | Ausfall Switch oder Verbindung in $LAN_0$ |
| - | - | x | o | G-FO zu G1 | G0 Ausfall |
| - | - | - | x | IF-FO zu IF1 und G-FO zu G1 | Ausfall Switch mit Quererbindung $Q_1$ in $LAN_0$ |
| - | - | - | - | Kein FO (IF0 aktiv) | G0 und G1 Ausfall |

Dabei bedeutet ein Gateway Failover, daß der Host einen anderen Gateway zum Senden von IP Paketen Richtung IP Netzwerk verwendet, wohingegen Schnittstellen-Failover bedeutet, daß der Host eine andere Schnittstelle zum Senden und Empfangen von Nachrichten verwendet. Für die "interne" Kommunikation, d.h. die Kommunikation zwischen mehreren an das LAN angeschlossenen Hosts - nicht dargestellt -, ist es erforderlich, daß alle Hosts immer eine Verbindung zum gleichen Default Gateway G0 oder G1 haben. Dadurch wird die Host-zu-Host-Kommunikation auch bei Teilausfällen sichergestellt, beispielsweise bei Ausfällen des Querweges Q1. Ein Umschalten zum Ersatz Gateway G1 erfolgt erst, wenn der Default Gateway G0 weder über IF0 noch über IF1 erreichbar ist, was sich auch in der Priorisierung der Pfade niederschlägt.

Die erfindungsgemäße Netzwerkanordnung kann vorteilhaft mit einem Verfahren zum Test der Nachrichtenpfade kombiniert werden, welches im folgenden kurz beschrieben wird.

Der Test der Nachrichtenpfade erfolgt, indem der Host über jedes Interface bzw. jede Schnittstelle IF0, IF1 an jeden Gateway G0, G1 in sehr kurzen zeitlichen Abständen, z.B. aller 100 ms, spezielle Test IP Datagramme sendet. Als Source IP Adresse und als Destination IP Adresse wird die IP Adresse der jeweiligen eigenen Schnittstelle IF0 bzw. IF1 eingetragen. So wird das Test-Paket durch den Gateway wieder an die sendende Schnittstelle IF0, IF1 des Host zurückgespiegelt.

Folgende Tabelle zeigt die zu wählenden IP und MAC Adressen zum Test der Nachrichtenpfade Pfad1..Pfad4

| | Pfad1 | Pfad2 | Pfad3 | Pfad4 |
|---|---|---|---|---|
| Destination-MAC | G0 | G0 | G1 | G1 |
| Source-MAC | IF0 | IF1 | IF0 | IF1 |
| Destination-IP | IF0 | IF1 | IF0 | IF1 |
| Source-IP | IF0 | IF1 | IF0 | IF1 |

Prinzipiell erfolgt also die Adressierung der Layer 2 Nachrichten korrekt anhand der jeweiligen MAC (MAC = Media Access Control) Adressen, wohingegen die Adressierung der übergeordneten Layer 3 Nachrichten so modifiziert wird, daß die Layer 3 Nachrichten zur sendenden Instanz zurückgeroutet werden. Dieses Prinzip fußt auf der Tatsache, daß in der Regel Nachrichten des Layer n beim Transport durch ein Layer n-1 Netzwerk nicht modifiziert werden und daß Layer n Adreßinformationen durch das Layer n-1 Netzwerk nicht ausgewertet werden.

Für IP Testnachrichten besteht ein wichtiger Vorteil darin, daß nur die "IP-Forwarding" Funktion, die auf den hoch leistungsfähigen Schnittstellenkarten der Gateways realisiert ist, für die Spiegelung bzw. Rücksendung der Testnachrichten an die sendende Instanz erforderlich ist. Eine Überlastsituation im Gateway durch das Testverfahren kann somit nicht eintreten, da der Vermittlungsprozessor der Gateways überhaupt nicht in die Bearbeitung der Testnachrichten involviert ist.

Wird innerhalb einer bestimmten Zeit, z.B. 100 ms, die beim jeweiligen Ziel gespiegelte Testnachricht vom Host nicht wieder empfangen, liegt wahrscheinlich eine Störung des entsprechenden Nachrichtenpfades vor. Dies wird beispielweise in einem Speicher vermerkt. Die Störung des Nachrichtenpfades kann auch erst dann als andauernde Störung vermerkt werden, wenn auch die folgende, mit diesem Nachrichtenpfad assoziierte Testnachricht nicht wieder beim Host empfangen wird. Es kann auch die Anzahl der aufeinanderfolgenden Nachrichten, die pro Nachrichtenpfad verlorengehen dürfen, bevor dies als Störung gewertet wird, den jeweiligen Anforderungen anpaßbar gestaltet werden.

Es besteht ferner die Möglichkeit, die ausgesendeten Testnachrichten mit Folgenummern oder Sequenznummern zu kennzeichnen. Diese werden in die Payload der Testnachrichten eingetragen. Der Verlust einer konfigurierbaren Anzahl nicht notwendigerweise aufeinanderfolgender Testnachrichten kann ebenso als Kriterium für die Ausfallerkennung herangezogen werden, d.h. die Nachrichtenpfade werden durch Numerierung der Testnachrichten überwacht. Der Zähler für verlorene Testnachrichten kann dabei so gestaltet sein, daß eine verlorene Testnachricht den Zähler um 1 erhöht und eine konfigurierbare Anzahl verlustfrei empfangener Testnachrichten, z.B. 1000, den Zähler um 1 erniedrigt. Alternativ kann das Erniedrigen des Zählers nach Ablauf einer Zeitspanne, während der kein Testnachrichtenverlust aufgetreten ist, erfolgen. Erreicht der Zähler einen Grenzwert, wird der Nachrichtenpfad als gestört gewertet.

Werden die Nachrichtenpfade mit hinreichend kurzen zeitlichen Abständen mit Hilfe des erfindungsgemäßen Verfahrens überprüft, z.B. aller 100 ms, und wird ein fehlgeschlagener Test genau einmal wiederholt, bevor der entsprechende Pfad als gestört gewertet wird, wird bei Fehlschlagen des wiederholten Tests der Nachrichtenpfad mit sehr geringer Verzögerung, hier 200 ms, als gestört erkannt.

Dem Fachmann ist es anhand des konkreten Einsatzfalles ohne weiteres möglich, die beschriebenen Parameter des Testverfahrens an den Einsatzfall anzupassen.

Nachdem eine Störung erkannt und vermerkt wurde, besteht die Notwendigkeit, den Nutzdatenverkehr des gestörten Nachrichtenpfades auf einen anderen, ungestörten Nachrichtenpfad umzulenken. Die Verfahren hierzu sind wohlbekannt. Beispielsweise sendet der Host einen "Gratituous ARP", d.h. einen ARP Request bzgl. der eigenen IP Addresse. Als Source MAC Addresse verwendet der Host die Schnittstelle, von der die Anforderung ausgeht, und als gesuchte IP Addresse die eigene IP Addresse. Durch den ARP Broadcast werden die ARP Caches aller angeschlossenen Hosts und Gateways mit der MAC/IP Addressrelation aktualisiert. Die Umschaltung erfolgt beispielsweise auf die in Zusammenhang mit Figuren 3-6 erläuterten Ersatz-Nachrichtenpfade, die gemäß ihrer Priorisierung ausgewählt werden.

Obwohl das Ausführungsbeispiel der Erfindung mit Bezug auf eine IP/LAN Umgebung beschrieben ist, ist die Erfindung nicht auf diese Protokollumgebung beschränkt. Verbindungsorientierte Protokolle können beispielsweise für der Host-Gateway Verbindung genutzt werden. Wird durch das Protokoll eine Unterbrechung der Verbindung erkannt, kann eine Umschaltung auf einen redundanten Übertragungsweg veranlaßt werden. Beispiel für solche Protokolle sind Real Time Protocol RTP oder Stream Control Transmission Protocol SCTP.

**Patentansprüche**

1. Netzwerkanordnung für ein Kommunikationsnetz (LAN), welches eine erste Einrichtung (Host) und eine zweite Einrichtung (G0) verbindet,

   - bestehend aus einem ersten Teilnetz ($LAN_0$) und zumindest einem zweiten Teilnetz ($LAN_1$),
   - wobei das erste Teilnetz ($LAN_0$) aus ersten vermittelnden Elementen ($S_{00}$, $S_{01}$, $S_{02}$) besteht und wobei das zweite Teilnetz ($LAN_1$) aus zweiten vermittelnden Elementen ($S_{10}$, $S_{11}$, $S_{12}$) besteht und
   - wobei das erste und das zweite Teilnetz unabhängig voneinander aufgebaut sind,
   - mit zumindest einer Querverbindung ($Q_1$) zwischen den Teilnetzen ($LAN_0$, $LAN_1$) und
   - mit zumindest einer ersten Verbindung ($L_{00}$) zwischen dem ersten Teilnetz und einer ersten Schnittstelle (IF0) der ersten Einrichtung (Host) und zumindest einer zweiten Verbindung ($L_{10}$) zwischen dem zweiten Teilnetz und einer zweiten Schnittstelle (IF1) der ersten Einrichtung (Host) und
   - mit zumindest einer dritten Verbindung ($L_{03}$) zwischen dem ersten Teilnetz und der zweiten Einrichtung (G0).

2. Netzwerkanordnung nach Anspruch 1,
   **dadurch gekennzeichnet,**
   **daß** zumindest eine der Querverbindungen ($Q_1$) unmittelbar am Übergang des Kommunikationsnetzes (LAN) zur zweiten Einrichtung (G0) angeordnet ist.

3. Netzwerkanordnung nach einem der Ansprüche 1 oder 2,
   mit zumindest einer vierten Verbindung ($L_{13}$) zwischen dem ersten Teilnetz und einer der zweiten Einrichtung (G0) gleichartigen dritten Einrichtung (G1).

4. Netzwerkanordnung nach einem der Ansprüche 1 bis 3,
   **dadurch gekennzeichnet,**
   **daß** die Kommunikation zwischen der ersten und der zweiten oder dritten Einrichtung mittels Nachrichten einer ersten Protokollschicht erfolgt, deren Übertragung im Kommunikationsnetz (LAN) mittels einer der ersten Protokollschicht untergeordneten zweiten Protokollschicht erfolgt.

5. Netzwerkanordnung nach Anspruch 4,
   **dadurch gekennzeichnet,**

**daß** die erste Protokollschicht durch das Internet Protocol IP gebildet wird und die zweite Protokollschicht durch ein Protokoll eines Local Area Network LAN gebildet wird.

FIG 1

## FIG 2

## FIG 3

## FIG 4

## FIG 5

FIG 6

FIG 7

**Europäisches Patentamt**

**EUROPÄISCHER RECHERCHENBERICHT**

Nummer der Anmeldung

EP 02 01 9298

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 168 714 A (ROCKWELL ELECTRONIC COMMERCE C) 2. Januar 2002 (2002-01-02)<br>* Zusammenfassung *<br>* Spalte 3, Zeile 16 - Zeile 20 *<br>* Spalte 3, Zeile 56 - Zeile 57 *<br>* Spalte 3, Zeile 58 - Spalte 4, Zeile 15 *<br>* Spalte 4, Zeile 35 - Zeile 45 *<br>* Spalte 5, Zeile 43 - Zeile 46 *<br>* Ansprüche 1,2 *<br>--- | 1-5 | H04L12/28<br>H04L29/14 |
| A | DE 40 41 235 C (AEG WESTINGHOUSE TRANPSORT SYSTEME) 20. Februar 1992 (1992-02-20)<br>* Spalte 1, Zeile 18 - Zeile 22 *<br>* Spalte 2, Zeile 30 - Zeile 46 *<br>* Spalte 4, Zeile 14 - Zeile 26 *<br>* Anspruch 1 *<br>--- | 1-5 | |
| A | EP 1 089 506 A (LUCENT TECHNOLOGIES INC) 4. April 2001 (2001-04-04)<br>* Spalte 3, Zeile 33 - Zeile 36 *<br>* Spalte 5, Zeile 38 - Zeile 42 *<br>* Spalte 7, Zeile 16 - Zeile 25 *<br>* Abbildung 3 *<br>----- | 1,4,5 | **RECHERCHIERTE SACHGEBIETE (Int.Cl.7)**<br><br>H04L |

Der vorliegende Recherchenbericht wurde für alle Patentansprüche erstellt

| Recherchenort | Abschlußdatum der Recherche | Prüfer |
|---|---|---|
| DEN HAAG | 13. Februar 2003 | Ngao, Y.S. |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 01 9298

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-02-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 1168714 | A | 02-01-2002 | AU<br>CA<br>EP | 4386501 A<br>2344789 A1<br>1168714 A2 | 03-01-2002<br>27-12-2001<br>02-01-2002 |
| DE 4041235 | C | 20-02-1992 | DE | 4041235 C1 | 20-02-1992 |
| EP 1089506 | A | 04-04-2001 | CN<br>EP<br>JP | 1291033 A<br>1089506 A2<br>2001160840 A | 11-04-2001<br>04-04-2001<br>12-06-2001 |

EPO FORM P0461

Für nähere Einzelheiten zu diesem Anhang : siehe Amtsblatt des Europäischen Patentamts, Nr.12/82